# EUROPEAN PATENT SPECIFICATION

(11) **EP 3 956 065 B1**
(45) Date of publication and mention of the grant of the patent: **31.08.2022**
(21) Application number: 20721755.5
(22) Date of filing: 15.04.2020
(51) Int. Cl.: B03B 7/00, B07B 9/00, B03D 1/02, B03D 1/08

(54) **DRY GRINDING SYSTEM AND METHOD FOR REDUCED TAILINGS DEWATERING, IMPROVING FLOTATION EFFICIENCY, PRODUCING DRIER TAILINGS, AND PREVENTING FILTER MEDIA BLINDING**
TROCKENMAHLANLAGE UND VERFAHREN FÜR VERRINGERTE RÜCKSTANDSENTWÄSSERUNG, VERBESSERUNG DER FLOTATIONSLEISTUNG, HERSTELLUNG VON TROCKNERRÜCKSTÄNDEN UND VERHINDERUNG DER BLENDUNG VON FILTERMEDIEN
SYSTÈME DE BROYAGE À SEC ET PROCÉDÉ POUR DÉSHYDRATATION DE RÉSIDUS RÉDUITS, POUR AMÉLIORER L'EFFICACITÉ DE FLOTTATION, POUR PRODUIRE DES RÉSIDUS PLUS SECS ET POUR EMPÊCHER UN BOUCHAGE DE MILIEU DE FILTRE

(30) Priority: 15.04.2019 US 201962834014 P
(43) Date of publication of application: 23.02.2022
(73) Proprietor: FLSmidth A/S, 2500 Valby (DK)
(72) Inventor: WISDOM, Todd, Draper, Utah 84020 (US)
(86) International application number: PCT/IB2020/053567
(87) International publication number: WO 2020/212876

(56) References cited:
- CN-U- 206 139 326
- US-A- 4 598 873
- US-A- 4 915 706
- US-A1- 2014 117 125
- US-A1- 2018 036 803

## Description

### FIELD OF THE INVENTION

This application pertains to flotation circuits and related flowsheets - in particular, flowsheets which incorporate thickeners and/or filters to stack tailings from flotation circuits. Examples of related flotation circuit are known from US 4 598 873 and US 2014/117125.

Embodiments of the disclosed system and method utilize a dry grinding process, (such as a grinding process involving a vertical roller mill or an HPGR), and a dry classification step thereafter, to allow fines (e.g., P80 less than 20 microns) to short-circuit downstream flotation processing, sedimentation, and filtration dewatering steps. This can improve flotation circuit performance, avoid downstream filter cloth blinding, and ensure drier, more stable tailings ponds over wet-grinding methods traditionally used for minerals processing.

It will become apparent from this disclosure that embodiments of the dry grinding system and method described herein offer various advantages and benefits not yet available with conventional minerals processing flowsheets.

### BACKGROUND OF THE DISCLOSURE

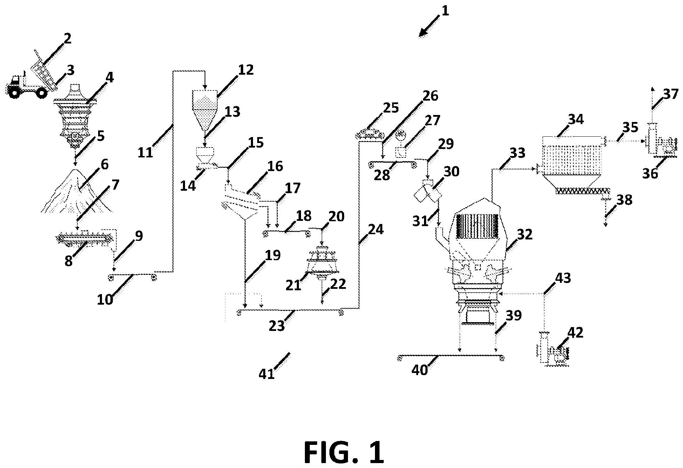

Turning now to prior art FIG. 1, cement production typically involves a dry grinding process 1 involving a truck 2 which delivers ore 3 such as limestone to a primary crusher 4 such as a gyratory crusher. Discharge 5 from the primary crusher 4 or primary crushing circuit is stacked in a stockpile 6. A portion 7 of the stockpile 6 is fed to an apron feeder 8. The apron feeder 8 discharges material 9 to a first conveyor 10 which provides a feed 11 to a surge bin 12. Material 13 leaving the surge bin 12 is provided to a bin feeder 14. Discharge 15 from the bin feeder 14 feeds a screen 16, such as a vibrating screen, dual layer screen, or other type of sizer or particle size classifier. Shown in FIG 1 is a dual layer vibratory screen. Coarser particles 17 leaving the screen 16 as overflow are sent to a second conveyor 18, whereas screen underflow 19 leaving the screen 16 is delivered to a third conveyor 23. The discharge 20 from the second conveyor 18 serves as feed to a secondary crusher 21 or secondary crushing circuit, for example, a comminution circuit comprising a secondary crusher 21 such as a cone crusher.

Material 22 leaving the secondary crusher 21 is reduced in size as compared to the feed 20 to the secondary crusher 21. The material 22 discharged from the secondary crusher 21 may end up being conveyed on the third conveyor with the screen underflow 19 leaving the screen 16 and regrind material 41 leaving a Vertical Roller Mill (VRM) 32 such as the FLSmidth^{®} OK^{™} mill. The combination of material 24 leaving the third conveyor 23 passes under a magnetic belt separator 25 to remove tramp metal and the like from the material 24 of the third conveyor 23. Material 26 substantially free of tramp metal passes on a fourth conveyor 28 through a metal detection system 27 to ensure the material 26 is free of metal before being supplied to a splitter 30. Material 29 discharged from the fourth conveyor enters the splitter 30 and a portion of that material 29 is designated as feed 31 to the vertical roller mill 32.

The vertical roller mill 32 receives fluidizing air or gas 43 from a fan 42 to suspend fines and not coarse particles. The fines 33 being suspended within the vertical roller mill 32 are eventually discharged from the vertical roller mill 32 and provided as feed to a baghouse filter 34. Filtered air 35 leaves the baghouse filter 34 via a fan 36, where air 37 may be returned to atmosphere or reintroduces to the vertical roller mill 32 as fluidizing air/gas 43 via fan 42. Product comprising dry fines 38 leaving the baghouse filter 34 may be used in the processing of cement.

Coarse discharge 39 leaving the vertical roller mill 32 may be provided to a fifth conveyor 40 which supplies the regrind material 41 to third conveyor 23 for combination with screen underflow 19 and the material 22 discharged from the secondary crusher 21.

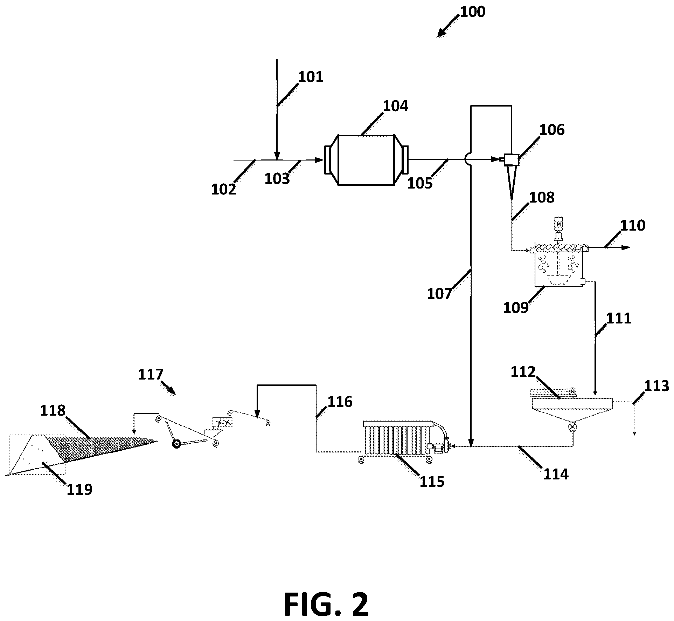

Turning now to prior art FIG. 2, a wet-grinding process 100 typically used in minerals processing flowsheets generally comprises adding water or liquid 101 to a crushed and/or pre-sized ore feed 102. The feed 102 may be a product of an upstream primary and/or secondary crushing circuit (not shown). The upstream primary and/or secondary crushing circuit may be similar to what has been described for FIG. 1.

The combined wetted feed 103 enters a wet-grinding mill 104 such as an autogenous (AG) or semi-autogenous (SAG) mill, a ball mill, a rod mill, or other type of fine grinding mill (e.g., attrition mill, stirred media mill, FLSmidth VXPmill^{™}, Glencore Xtrata IsaMill^{™}, etc.). The material 105 exiting the wet-grinding mill is fed to one or more hydrocyclones 106, wherein overflow 107 leaving the one or more hydrocyclones 106 comprises a fines fraction (e.g., having a sub-10 micron PSD) which is delivered to tailings as wet fines that need dewatering in at least one filter 115. Hydrocyclone underflow 108 comprises a coarse fraction of feed 105 which is fed to a flotation circuit 109 which may comprise a flotation bank, one or more flotation cells, one or more flotation preconditioning tanks, rougher cells, scavenger cells, etc. Product 110 from flotation circuit 109 may be further processed, and tailings 111 from the flotation circuit 109 may be dewatered in a sedimentation tank, thickener, or clarifier 112 where clarified fluid 113 is captured (e.g., for process water recycle), and thickened underflow (e.g., mud) 114 is combined with the wet fines 107 leaving the hydrocyclone 106. The combination of thickener discharge 114 and wet fines 107 are further dewatered in the at least one filter 115. Dewatered tailings 116 leaving the filtration process (typically as cake) is conveyed and stacked 117 and eventually enters a tailings storage facility 118 which may be supported by a dam 119.

A major problem with such processes 100 such as the one shown in FIG. 2, is that wet fines 107 blind filter media during filtration in filter(s) 115. The wet fines also require more driving force, which makes dewatering the slurry more difficult requiring larger thickeners and higher driving forces in the filter(s) 115. Accordingly, pressure filters are generally required, instead of vacuum filters.

Another major problem with such processes 100, such as the one shown in FIG. 2, is that some fines (e.g., having a PSD which is less than 20 microns) may end up in the flotation circuit 109 and compromise efficiency, recovery, reagent consumption, and/or negatively impact the performance of the flotation circuit 109.

A further problem with such processes 100, such as the one shown in FIG. 2, is that wet fines in the dewatered tailings 116 from downstream filter(s) 115 or thickening devices 112 can lead to unstable tailings ponds 118. Accordingly, failure of tailings dam 119 can be catastrophic.

### OBJECTS OF THE INVENTION

It is, therefore, an object of the invention to provide a system and method which uses dry grinding, rather than wet-grinding, to conserve water.

It is another object of embodiments of the invention to provide a system and method which circumvents the aforementioned problems associated with prior art processes.

It is a further object of embodiments of the invention to provide a system and method which avoids problems in a flotation circuit which are caused by fines.

It is a further object of embodiments of the invention to provide a system and method which avoids problems in downstream tailings dewatering, for example, occurrences of blinding filter media due to poor dewatering solids such as fines being filtered before disposal as tailings.

It is a further object of embodiments of the invention to provide a system and method which avoids having too many wet fines being sent to a tailings disposal site (e.g., a tailings pond), which compromises geostabillity.

It is a further object of embodiments of the invention to provide a system and method which increases geostability of tailings disposal sites by combining dewatered tailings with dry fines (e.g., sub-20 micron particles) which would normally negatively impact flotation processes and/or subsequent dewatering processes.

These and other objects will be apparent from the appended drawings and description herein.

It should be noted that embodiments of the invention may be particularly suitable for use with plants concerning gold, phosphate, iron ore, rare earth, mineral sands, or platinum group metal (PGM) processing, without limitation.

### BRIEF SUMMARY OF THE INVENTION

A minerals processing system 200, 300 for recovering metal values from ore 3 is disclosed. The minerals processing system 200, 300 may comprise a flotation circuit 109 and a dry grinding circuit preceding the flotation circuit 109. The dry grinding circuit may comprise a vertical roller mill 32 or roller grinder 302. It is conceived that both a vertical roller mill 32 and roller grinder 302 may be employed in some embodiments. The dry grinding circuit may also comprise at least one dry air particle separation device 201, 304, 307 between said vertical roller mill 32 or roller grinder 302 and the flotation circuit 109. The at least one dry air particle separation device 201, 304, 307 may be configured to provide a dry fines stream 38, and a dry coarse stream 202.

The coarse stream 202 from the at least one dry air particle separation device 201, 304, 307 is provided to the flotation circuit 109 to recover said metal values. The dry fines stream 38 from the at least one dry air particle separation device 201, 304, 307 is combined with dewatered tailings 116, for example, dewatered tailings 116 derived from material 110, 111 leaving said flotation circuit 109, without limitation.

The dry fines stream 38 are combined with the dewatered tailings 116 in a mixer 204.

The the mixer 204 is provided upstream of stacking equipment 117 and/or a tailings pond 118, without limitation.

A thickener 112 is provided between the mixer 204 and the flotation circuit 109, without limitation. A filter 115 is provided between the mixer 204 and the thickener 112, the filter 115 being configured to further dewater material 114 leaving said thickener 112. The thickener 112 and the filter 115 may be configured to dewater the material 110, 111 leaving said flotation circuit 109 and/or provide the dewatered tailings 116 to the mixer 204, without limitation.

In some embodiments, the dry fines stream 38 may comprise a particle size distribution less than 20 microns, without limitation. In some embodiments, the dry fines stream 38 may comprise a particle size distribution less than 15 microns, without limitation. In some embodiments, the dry fines stream 38 may comprise a particle size distribution less than 10 microns, without limitation. The dry coarse stream 202 comprises a particle size distribution greater than that of the dry fines stream 38. In some embodiments, the dry coarse stream 202 may comprise a particle size distribution greater than 10 microns, without limitation. In some embodiments, the dry coarse stream 202 may comprise a particle size distribution greater than 15 microns, without limitation. In some embodiments, the dry coarse stream 202 may comprise a particle size distribution greater than 20 microns, without limitation.

The at least one dry air particle separation device 201, 304, 307 may, in some embodiments, be selected from the group consisting of: a solid-solid classifier, an air separator, a static separator, a static grit separator, a dropout box, V-separator, a dynamic separator, a rotary air classifier, a whizzer classifier, a first-generation turbo separator comprising one or more internal cyclones, a second-generation cyclone separator comprising one or more external cyclones, a third-generation cage separator comprising a squirrel or rotor cage, a ROKSH dynamic separator, an O-Sepa^{®} dynamic separator, a gas cyclone, a static falling bed separator, and a dry cyclonic separator, without limitation. In some embodiments, the minerals processing system 200, 300 may comprise a plurality of dry air particle separation devices 201, 304, 307, without limitation.

in some embodiments, a baghouse filter 34 may be provided between the at least one dry air particle separation device 201, 304, 307 and mixer 204, without limitation. In some embodiments, a magnetic separator 310 may be provided. The magnetic separator 38 may be provided downstream of the baghouse filter 34. The magnetic separator 38 is configured to perform a magnetic separation on the dry fines stream 38 and recover magnetic particles or ferromagnetic minerals 311 therefrom.

A method of recovering metal values from ore 3 using the minerals processing system 200, 300 is also described. The method may comprise the step of crushing the ore 3 to produce feed 31 to the dry grinding circuit. The method may comprise the step of dry grinding the feed 31 in the dry grinding circuit (e.g., using the vertical roller mill 32 or roller grinder 302). The method may comprise the step of sending product from the vertical roller mill 32 or roller grinder 302 to the dry air particle separation device 201, 304, 307. The method may comprise the step of producing the dry fines stream 38 and the dry coarse stream 202 using the dry air particle separation device 201, 304, 307.

The method may comprise the step of performing a flotation operation on the dry coarse stream 202 in the flotation circuit 109. The method may comprise the step of dewatering the material 110, 111 leaving said flotation circuit 109 to produce the dewatered tailings 116. The method may comprise the step of mixing 204 the dry fines stream 38 with the dewatered tailings 116.

The step of dewatering the material 110, 111 leaving said flotation circuit 109 to produce the dewatered tailings 116 may comprise the step of thickening 112 the material 110, 111 leaving said flotation circuit 109. The step of dewatering the material 110, 111 leaving said flotation circuit 109 to produce the dewatered tailings 116 may comprise the step of filtering 115 the material 110, 111 leaving said flotation circuit 109. The method may further comprise the steps of performing a magnetic separation 310 on the dry fines stream 38 and removing magnetic particles or ferromagnetic minerals 311 therefrom.

A dry grinding system and method for use in minerals processing is disclosed. The dry grinding system and method may be employed/enacted within a minerals processing system 200, 300 for recovering metal values from ore 3. The dry grinding system may comprise at least one dry air particle separation device 201, 304, 307 which is configured to provide a dry fines stream 38 having a particle size distribution less than about 20 microns (e.g., less than about 10 microns), and a dry coarse stream 202 having a particle size distribution greater than about 10 microns (e.g., approximately 20-300 microns), without limitation.

The coarse stream 202, when combined with water prior to the flotation cell, may be provided to the flotation circuit 109 to recover metal values from the ore 3 contained within the dry coarse stream 202. However, the dry fines stream 38 (or a portion thereof) may remain unprocessed by the flotation circuit 109 - and instead may be combined with dewatered tailings 116 derived from material 110, 111 leaving said flotation circuit 109. Either stream 110 or 111 can be the tailings stream to be dewatered 112, 115, depending on the process (e.g., traditional flotation or reverse flotation). Accordingly, while not shown, stream 110 (rather than stream 111) may be dewatered and/or sent to tailings, without limitation.

### BRIEF SUMMARY OF THE DRAWINGS

To complement the description which is being made, and for the purpose of aiding to better understand the features of the invention, a set of drawings illustrating the new and novel dry grinding system and method is attached to the present specification as an integral part thereof, in which the following has been depicted with an illustrative and non-limiting character.
FIG. 1 illustrates a conventional dry grinding system used in the cement industry.
FIG. 2 illustrates a conventional wet-grinding system used in the minerals industry - in particular, for a flotation process.
FIG. 3 illustrates a dry grinding system according to a non-limiting embodiment of the invention, which will be described in further detail hereinafter.

In the following, the invention will be described in more detail with reference to drawings in conjunction with exemplary embodiments.

### DETAILED DESCRIPTION

While the present invention has been described herein using exemplary embodiments of a dry grinding system and method for flotation and subsequent dewatering for tailings disposal, it should be understood that numerous variations and adaptations of the same will be apparent to those of ordinary skill in the field from the teachings provided herein.

The invention is defined by the appended independent claims. Any information falling outside the scope of the claims is for explanation only. Where ranges are disclosed herein, the range may be inclusive of each high and low value listed.

The inventor has recognized a novel and heretofore unappreciated system and method of feeding a flotation circuit and tailings pond. Embodiments involve the inventive concept of reducing the number of fines (e.g., sub-20 micron particles, without limitation) that are processed by the flotation circuit 109 and then subsequently dewatered (e.g., using sedimentation equipment 112 and/or filtration equipment 115). Embodiments also involve the inventive concept of "dry"-grinding ore (as done with cement processing) before flotation, rather than "wet"-grinding before flotation as traditionally done for mineral processing, thereby reducing consumption of water in a minerals processing flowsheet. Embodiments further involve the inventive concept of reducing the number of wet fines 107 that need filtering 115 before disposal in tailings ponds 118. Embodiments also involve the inventive concept of adding dry fines from a dry fines stream 38 to dewatered tailings 116 (e.g., wet tails or moisture-laden filter cake) leaving one or more tailings filters 115 and/or thickening devices 112, to reduce moisture content of tailings and help dry out tailings ponds 118. In this regard, a tailings pond 118 may be rendered more geostable in the unforeseen event of catastrophic dam 119 failure. Embodiments described herein also enable separate disposal of dry fines 38 and dewatered 114, 116 or undewatered 110, 111 tailings.

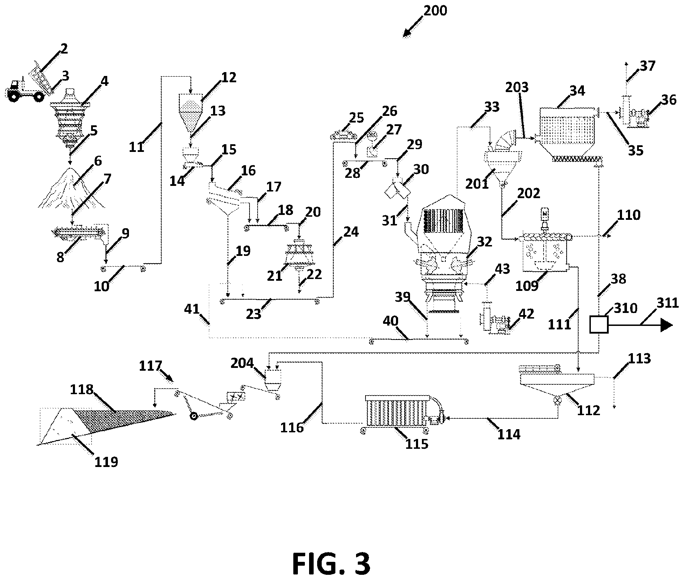

Turning now to FIG. 3, according to some embodiments, a system and method 200 of dry grinding may comprise a vertical roller mill (VRM) 32, rather than a traditional wet-grinding mill 104. The system and method 200 may use a dry cement comminution method similar to the one shown in FIG. 1 and described above in the Background of the Disclosure section of this specification.

The system and method 200 may comprise a dry grinding process 1 involving a truck 2 which delivers ore 3 containing a mineral value (e.g., iron, phosphate, rare earth, platinum group metal (PGM), gold, silver, or the like) to a primary crusher 4 such as a gyratory crusher.

Discharge 5 from the primary crusher 4 or primary crushing circuit may be stacked in a stockpile 6. A portion 7 of the stockpile 6 may be fed to an apron feeder 8. Material 9 leaving the apron feeder 8 may be conveyed by a first conveyor 10 to a surge bin 12 as feed 11. Material 13 leaving the surge bin 12 may be provided to a bin feeder 14. The bin feeder 14 may discharge material 15 to a screen 16, such as a vibrating screen, dual layer screen, or other type of sizer or particle size classifier.

Coarser particles 17 leaving the screen 16 (e.g., as overflow) may be sent to a second conveyor 18, whereas screen underflow 19 leaving the screen 16 may be delivered to a third conveyor 23. Discharge 20 from the second conveyor 18 may feed a secondary crusher 21 or secondary crushing circuit, for example, a comminution circuit comprising a secondary crusher 21 such as a cone crusher, without limitation. It should be noted that the secondary crusher 21 may comprise one or more crushers, and the one or more crushers may include any type of secondary crusher including, but not limited to, jaw crushers, impact hammers, sizers, gyratory crushers, and the like - without limitation.

Material 22 leaving the secondary crusher 21 may be reduced in overall average size as compared to the feed 20 entering the secondary crusher 21. The material 22 discharged from the secondary crusher 21 may end up being conveyed on the third conveyor 23 along with the screen underflow 19 leaving the screen 16 and regrind material 41 comprised of a coarse fraction material 39 leaving a Vertical Roller Mill (VRM) 32.

The combination of material 24 leaving the third conveyor 23 may be passed by a magnetic separator 25 (e.g., under an overbelt magnet) to remove tramp metal and the like from the material 24 from the third conveyor 23. Material 26 substantially free of tramp metal may pass through a metal detection system 27 (e.g., via a fourth conveyor 28) to ensure the material 26 is essentially free of metal before being supplied to a splitter 30. Material 29 discharged from the fourth conveyor may enter the splitter 30 and a portion of that material 29 entering the splitter 30 may be designated as dry feed 31 to the vertical roller mill 32 for dry grinding within the vertical roller mill 32.

The vertical roller mill 32 may receive fluidizing air or gas 43 from a fan 42 to suspend fines so that they are not further pulverized. The fluidizing air or gas 43 may be configured such that coarse particles are unaffected and stay on a grinding table within the vertical roller mill 32, or exit the mill 32 as indicated by reference numeral 39. The fines 33 being suspended within the vertical roller mill 32 may be discharged (e.g., cyclonically or via a fan) from the vertical roller mill 32 and provided as feed to a downstream dry air particle separation device 201, for separating particles by size and performing size separations.

In some exemplary embodiments, the dry air particle separation device 201 may comprise a solid-solid classifier or air separator such as: a Taiheiyo Engineering O-SEPA V separator, an FLSmidth^{®} O-Sepa^{®} separator, an FLSmidth^{®} SEPAX^{®} separator, an FLSmidth^{®} ROKSH separator, or a V-separator, Sepmaster model separator, or VSK^{®} model separator offered by KHD Humboldt Wedag GMBH, or the like, without limitation.

It should be understood that the dry air particle separation device 201 may comprise a static separator (e.g, a static grit separator, cyclone, V-separator, or dropout box), without limitation. In some embodiments, it may be preferred that the dry air particle separation device 201 comprise a dynamic separator, such as: a turbo separator (e.g., a classifying device comprising internal cyclones, often referred to as a "first generation" separator); a cyclone separator (e.g., a classifying device comprising one or more external cyclones, often referred to as a "second generation" separator); or a cage-type separator (e.g., a classifying device comprising a squirrel-cage or rotor cage, often referred to as a "third generation" separator or "high-efficiency" separator). In some embodiments, the dry air particle separation device 201 may comprise a rotary air classifier, a whizzer classifier, a gas cyclone, a static falling bed separator, or a dry cyclonic separator, without limitation.

The underflow 202 may be mixed with water prior to flotation 109. Underflow 202 from the dry air particle separation device 201 preferably comprises a particle size distribution (PSD) which is at least about 10 microns and more preferably greater than about 20 microns, without limitation.

Overflow 203 from the dry air particle separation device 201 preferably comprises a particle size distribution (PSD) which is less than about 20 microns, and more preferably less than about 10 microns, without limitation. The overflow 203 may be sent to a baghouse filter 34. Filtered air 35 leaving the baghouse filter 34 may be pumped (e.g., via a fan 36) to the atmosphere or it may be reintroduced to the vertical roller mill 32 as fluidizing air/gas 43 via fan 42, without limitation. The coarser underflow 202 from the dry air particle separation device 201 may be fed to a floatation circuit 109. In some instances, the underflow 202 may enter a pre-conditioning tank with water and reagent. In some instances, the underflow 202 may enter a rougher or scavenger flotation cell, without limitation.

Fine dry solid product 38 leaving the baghouse filter 34 is sent to a mixer 204 (e.g., pug mill), or otherwise added to and/or combined with dewatered tailings 116 leaving one or more filters 115.

Accordingly, the moisture content of the dewatered tailings 116 leaving the filter(s) 115 is reduced by virtue of the dry fines 38 wicking residual moisture from the dewatered tailings 116. Combination of the dry fines 38 with dewatered tailings 116 may occur during, before, or after conveying or stacking 117, without limitation. Preferably combination of the dry fines 38 and dewatered tailings 116 is performed before entering a tailings pond 118 as shown.

The flotation circuit 109 may comprise a flotation bank, one or more flotation cells, one or more flotation preconditioning tanks, one or more rougher cells, one or more scavenger cells, or the like, without limitation. Product 110 from flotation circuit 109 may be further processed, and tailings 111 from the flotation circuit 109 may be dewatered in a sedimentation tank, thickener, or clarifier 112. Clarified fluid 113 may be captured during this sedimentation process (e.g., for recycling), and the thickened underflow (e.g., mud) 114 leaving the thickening device 112 is subsequently further dewatered in at least one filter 115. Dewatered tailings 116 leaving the filtration process (typically as cake) are combined with the dry fines 38 leaving the baghouse filter 34 to increase geostability of the tailings disposal site 118 - for example, in the event there is a catastrophic failure of a tailings dam 119, without limitation.

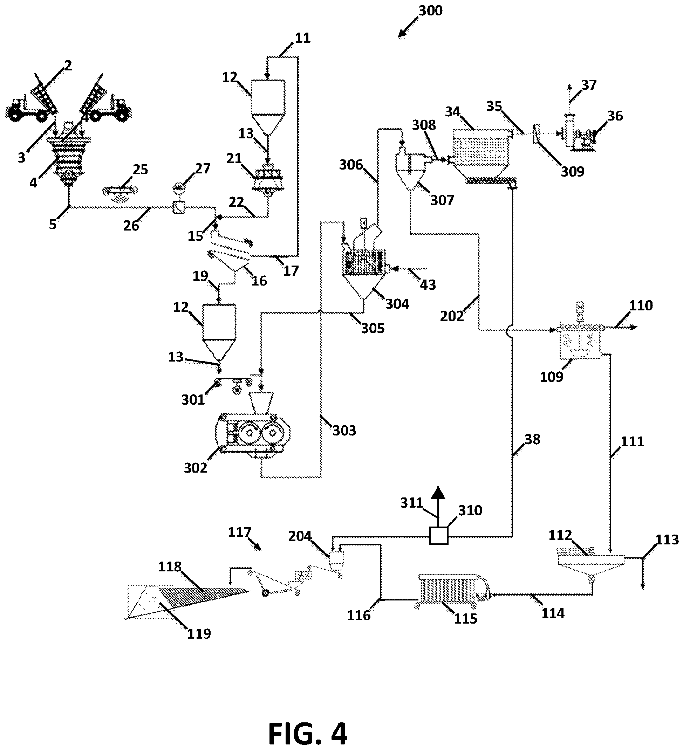

Turning now to FIG. 4, according to some embodiments, a system and method 300 of dry grinding may comprise a roller grinder 302, such as a roller press, roller mill, or high pressure grinding roll (HPGR) apparatus, rather than a traditional wet-grinding mill 104.

Ore 3 is transported via trucks 2 to a primary crusher 4, such as a gyratory crusher or crushing station thereof. Material 5 leaving the primary crusher 4 may pass a magnetic separation device 25 and/or a metal detection device 27 before proceeding to a screen 16 (e.g., a double vibratory screen, without limitation). Larger particles 17 of the ore 3 may be introduced as feed 11 to a surge bin 12. Contents 13 of the surge bin 12 may be delivered to secondary crushing (e.g., one or more secondary crushing units 21 such as a cone crusher as shown). It should be understood that any type of secondary crusher 21 (e.g., sizer, impact, jaw, or the like) may be used without limitation. Twice-crushed material 22 leaving the secondary crusher 21 may be combined with screen feed 15 that has passed the magnetic separation device 25 and/or a metal detection device 27. Underflow 19 that passes through screen 16 may be delivered to a surge bin 12 and its contents 13 placed on a weigh belt-type feeder 301 and delivered as feed 31 to a roller grinder 302 (e.g., roller press or high pressure grinding roller (HPGR), without limitation).

Discharge 303 from roller grinder 302 may be sent to a dry air particle separation device 304, such as an FLSmidth^{®} ROKSH cement separator or other dry air particle separation device 201 as earlier-described herein, without limitation. Fluidizing air or gas 43 may be introduced into the dry air particle separator 304 as shown to help suspend fines within the air particle separator 304.

A high particle size distribution (PSD) stream 305 (e.g., coarse underflow from the dry air particle separator 304) may be sent back to the grinding roller 302 as a coarse regrind feed.

A low particle size distribution (PSD) stream 306 (e.g., fines overflow from the dry air particle separator 304) may be delivered to a dropout chamber 307 as shown. Dropout chamber overflow discharge 308 (e.g., fines) may be sent to a baghouse filter 34. A damper 309 may be used to control flow of filtered air 35 from the baghouse filter 34.

Similar to the system and method 200 shown in FIG. 3, the embodiment of a system and method 300 shown in FIG. 4 may involve dry fine product 38 leaving the baghouse filter 34 and being combined with dewatered tailings 116 (e.g., leaving one or more filters 115 and/or thickening devices 112 as shown). The filter(s), if used, may comprise vacuum or pressure filters, such as a filter press without limitation. The dewatered tailings 116 may have a moisture content and may be provided in the form of a filter cake, without limitation. The dewatered tailings 116 may be formed of solids which have undergone processing within the filtration circuit 109.

By purposefully directing dry fines 38 around the flotation circuit 109, the flotation circuit 109 may demonstrate improved performance. By purposefully combining the dry fines 38 with moisture-laden dewatered tailings 116 derived from material 111 exiting the flotation circuit 109 (e.g., in a mixer 204), the geostability of tailings within a downstream tailings pond 118 may be improved - thereby mitigating risk in the event of catastrophic tailings dam 119 failure. Moreover, by purposefully directing dry fines 38 around the flotation circuit 109, less material needs to be dewatered through sedimentation 112 and/or filtration 115. Additionally, by purposefully directing dry fines 38 around the flotation circuit 109, filters 115 used to dewater material 110, 111 from the flotation circuit 109 may see reduced blinding of filter media used in/on the filters 115. While not shown, the dry fines 38 may also be disposed of separately from the tailings 110, 111, 114, 116. In yet further embodiments, some of the dry fines 38 may be added to tailings 110, 111, 114, 116 (e.g., via mixer 204); and the rest of the dry fines 38 may be disposed of separately.

In some embodiments, a magnetic separation device and/or magnetic separation step 310 may be performed on the dry fines 38 in order to remove magnetic particles or ferromagnetic minerals 311 therefrom. The removed materials may comprise, for instance, iron, nickel, and/or cobalt, without limitation. The magnetic separation device 310 may comprise any means for removing ferromagnetic minerals including, but not limited to: a plate magnet, grate magnet, drawer magnet, drum magnet, hump magnet, suspended magnet, magnetic head pulley, vertical spout magnet, overhead magnetic belt separator, or the like.

A contractor or other entity may provide or install any numbered or referenced element herein to create a system and method 200 according to embodiments of the invention. For example, one or more structures, components, or elements of an existing flowsheet or circuit may be removed from a customer site, and one or more structures, components, or elements may be provided to that same existing flowsheet or circuit to resemble the dry grinding system and/or method described herein. A contractor or other entity may receive a bid request for a project related to designing, fabricating, delivering, installing, operating, or performing maintenance on the same, without limitation. A contractor or other entity may offer to design, provide, maintain, install, or operate a similar dry grinding system or method - or offer technology similar in principle to the dry grinding system or method disclosed herein, or provide a process or service pertaining thereto, for a client. A contractor or other entity may offer to retrofit or may retrofit an existing operation with any one or more of the described components described herein, to make a system or perform a method in accordance with the embodiments described and/or claimed herein. It is further anticipated that a contractor or other entity may, in accordance with the inventive concepts and teachings described herein, offer for sale, sell to, deliver to, and/or install one or more vertical roller mills, solid-solid classifiers, or mixers described for an end user, client, or customer, without limitation.

Where used herein, the terms "system" "process" "plant" "flowsheet" "circuit" "operation" and "method" may be used interchangeably.

It should be understood that where a single feature, apparatus, component, or device is mentioned herein, a plurality of the same feature, apparatus, component, or device may be employed. Accordingly, where used herein, the term "a" preceding a noun may, in most practical instances, be replaced with *"at least one of'* or "*a plurality*"*,* without limitation.

### LIST OF ENUMERATED IDENTIFIERS IN THE DRAWINGS

- 1: Dry grinding process/system/plant for cement production
- 2: Truck
- 3: Ore (e.g., limestone)
- 4: Primary crusher (e.g., gyratory crusher)
- 5: Discharge from primary crushing
- 6: Stockpile
- 7: Feed to apron feeder
- 8: Apron feeder
- 9: Apron feeder discharge
- 10: First conveyor
- 11: Feed to surge bin
- 12: Surge bin
- 13: Surge bin discharge
- 14: Bin feeder
- 15: Feed to screen
- 16: Screen (e.g., vibrating screen, dual layer screen)
- 17: Screen overflow discharge
- 18: Second conveyor
- 19: Screen underflow discharge
- 20: Feed to secondary crusher/second conveyor discharge
- 21: Secondary crusher (e.g., cone crusher)
- 22: Secondary crusher discharge
- 23: Third conveyor
- 24: Third conveyor discharge
- 25: Overbelt magnet
- 26: Material substantially free of tramp metal
- 27: Metal detection system
- 28: Fourth conveyor
- 29: Fourth conveyor discharge
- 30: Splitter
- 31: Feed to dry grinding circuit (e.g., feed to vertical roller mill or feed to roller grinder)
- 32: Vertical Roller Mill (VRM) (e.g., FLSmidth^{®} OK^{™} mill)
- 33: Vertical Roller Mill (VRM) fines discharge/feed to baghouse filter
- 34: Baghouse filter
- 35: Filtered air
- 36: Fan
- 37: Return air
- 38: Dry fines/Dry fines stream
- 39: Vertical Roller Mill (VRM) coarse discharge
- 40: Fifth conveyor
- 41: Regrind material
- 42: Fan
- 43: Fluidizing air/gas
- 100: Wet-grinding process/system/plant for minerals processing
- 101: Water/liquid
- 102: Feed to "grinding" portion of comminution circuit/crushing circuit discharge
- 103: Wet feed to mill
- 104: Wet-grinding mill (e.g., AG/SAG mill, Ball mill, Rod mill, etc.)
- 105: Feed to hydrocyclone/wet-grinding mill discharge
- 106: Hydrocyclone
- 107: Hydrocyclone overflow (i.e., fines fraction)
- 108: Hydrocyclone underflow (i.e., coarse fraction)
- 109: Flotation circuit (e.g., flotation bank, one or more flotation cells, one or more flotation preconditioning tanks, etc.)
- 110: Product or material from flotation circuit (froth overflow as shown - but could be underflow in reverse flotation)
- 111: Tailings or material from flotation circuit (underflow as shown, - but could be froth overflow in reverse flotation)
- 112: Sedimentation tank/thickener (e.g., sedimentation, tailings dewatering)
- 113: Clarified fluid
- 114: Thickener discharge (e.g., underflow, mud, material leaving thickener)
- 115: Filter (e.g., filtration, tailings dewatering)
- 116: Dewatered tailings
- 117: Stacking/stacking equipment (e.g., conveyors, stackers, reclaimers)
- 118: Tailings pond
- 119: Tailings dam
- 200: Dry grinding process/system/plant for minerals processing
- 201: Dry air particle separator/separation device 202 Solid-solid classifier/air separator underflow (e.g., >20 micron PSD coarse fraction, feed to flotation circuit)
- 203: Solid-solid classifier/air separator overflow (e.g., sub- <20 micron PSD fines fraction, feed to baghouse filter)
- 204: Mixer (e.g., pug mill)
- 300: Dry grinding process/system/plant for minerals processing
- 301: Weigh belt
- 302: Roller grinder (e.g., High Pressure Grinding Roller (HPGR), roller press, roller mill, etc.)
- 303: Discharge from roller grinder
- 304: Dry air particle separator/separation
- 305: High particle size distribution (PSD) stream (e.g., coarse underflow stream from dry separator, coarse regrind feed to HPGR)
- 306: Low particle size distribution (PSD) stream (e.g., fines overflow from dry separator)
- 307: Dropout chamber
- 308: Dropout chamber overflow discharge (e.g., fines)
- 309: Damper
- 310: Magnetic separator
- 311: Magnetic particles (e.g., ferromagnetic minerals such as iron, nickel, cobalt)

## Claims

1. A minerals processing plant (200, 300) for recovering metal values from ore (3), the minerals processing plant (200, 300) comprising a flotation circuit (109) and a dry grinding circuit preceding the flotation circuit (109) , wherein the dry grinding circuit comprises a vertical roller mill (32) or roller grinder (302), and a plurality of dry air particle separation devices (201, 304, 307) between said vertical roller mill (32) or roller grinder (302) and the flotation circuit (109); the dry air particle separation devices (201, 304, 307) being configured to provide a dry fines stream (38), and a dry coarse stream (202),
wherein the coarse stream (202) is provided to the flotation circuit (109) to recover said metal values,
wherein the dry fines stream (38) is combined with dewatered tailings (116) derived from material (110, 111) leaving said flotation circuit (109),
wherein the dry fines stream (38) is combined with the dewatered tailings (116) in a mixer (204),
wherein the mixer (204) is provided upstream of stacking equipment (117) and/or a tailings pond (118),
**characterized in that**
a thickener (112) is provided between the mixer (204) and the flotation circuit (109), the thickener (112) being configured to dewater the material (110, 111) leaving said flotation circuit (109) and provide the dewatered tailings (116) to the mixer (204), and
wherein a filter (115) is provided between the mixer (204) and the thickener (112), the filter (115) being configured to further dewater material (114) leaving said thickener (112).

2. The minerals processing plant (200, 300) according to any one of the preceding claims, wherein said dry fines stream (38) has a particle size distribution less than 20 microns.

3. The minerals processing plant (200, 300) according to claim 2, wherein said dry fines stream (38) has a particle size distribution less than 15 microns.

4. The minerals processing plant (200, 300) according to claim 3, wherein said dry fines stream (38) has a particle size distribution less than 10 microns.

5. The minerals processing plant (200, 300) according to any one of the preceding claims, wherein the dry coarse stream (202) has a particle size distribution greater than the dry fines stream (38).

6. The minerals processing plant (200, 300) according to any one of the preceding claims, wherein the dry air particle separation devices (201, 304, 307) are selected from the group consisting of: a solid-solid classifier, an air separator, a static separator, a static grit separator, a dropout box, V-separator, a dynamic separator, a rotary air classifier, a whizzer classifier, a first-generation turbo separator comprising one or more internal cyclones, a second-generation cyclone separator comprising one or more external cyclones, a third-generation cage separator comprising a squirrel or rotor cage, a ROKSH dynamic separator, an O-Sepa^{®} dynamic separator, a gas cyclone, a static falling bed separator, and a dry cyclonic separator.

7. The minerals processing plant (200, 300) according to any one of the preceding claims, further comprising a baghouse filter (34) between the dry air particle separation devices (304, 307) and mixer (204).

8. The minerals processing plant (200, 300) according to any one of the preceding claims, further comprising a magnetic separator (310) configured to perform a magnetic separation on the dry fines stream (38) and recover magnetic particles or ferromagnetic minerals (311) therefrom.

9. A method of recovering metal values from ore (3) using the minerals processing plant (200, 300) described in any one of preceding claims 1-8; the method comprising the steps of:
crushing the ore (3) to produce feed (31) to the dry grinding circuit;
dry grinding the feed (31) in the dry grinding circuit using the vertical roller mill (32) or roller grinder (302);
sending product from the vertical roller mill (32) or roller grinder (302) to the dry air particle separation devices (201, 304, 307);
producing the dry fines stream (38) and the dry coarse stream (202) using the dry air particle separation devices (201, 304, 307);
performing a flotation operation on the dry coarse stream (202) in the flotation circuit (109);
dewatering the material (110, 111) leaving said flotation circuit (109) to produce the dewatered tailings (116); and
mixing (204) the dry fines stream (38) with the dewatered tailings (116), **characterized in that** dewatering the material (110, 111) leaving said flotation circuit (109) to produce the dewatered tailings (116) comprises thickening (112) the material (110, 111) leaving said flotation circuit (109) and wherein dewatering the material (110, 111) leaving said flotation circuit (109) to produce the dewatered tailings (116) comprises filtering (115) the material (110, 111) leaving said flotation circuit (109) Z

10. The method according to claim 9, further comprising performing a magnetic separation (310) on the dry fines stream (38) for removing magnetic particles or ferromagnetic minerals (311) therefrom.

## Patentansprüche

1. Mineralaufbereitungsanlage (200, 300) zum Gewinnen von Metallwertstoffen aus Erz (3), wobei die Mineralaufbereitungsanlage (200, 300) einen Flotationskreislauf (109) und einen Trockenmahlkreislauf, der dem Flotationskreislauf (109) vorausgeht, umfasst, wobei
der Trockenmahlkreislauf eine vertikale Walzenmühle (32) oder eine Wälzmühle (302), und eine Vielzahl von Trockenluft-Partikelabscheidungsvorrichtungen (201, 304, 307) zwischen der vertikalen Walzenmühle (32) oder der Wälzmühle (302) und dem Flotationskreislauf (109) umfasst; wobei die Trockenluft-Partikelabscheidungsvorrichtungen (201, 304, 307) dazu konfiguriert sind, einen Trockenfeingutstrom (38) und einen Trockengrobgutstrom (202) bereitzustellen,
wobei der Grobgutstrom (202) zu dem Flotationskreislauf (109) bereitgestellt wird, um die Metallwertstoffe zu gewinnen,
wobei der Trockenfeingutstrom (38) mit entwässerten Rückständen (116) kombiniert ist, die aus Material (110, 111), das den Flotationskreislauf (109) verlässt, stammen,
wobei der Trockenfeingutstrom (38) mit den entwässerten Rückständen (116) in einem Mischer (204) kombiniert ist,
wobei der Mischer (204) stromaufwärts einer Stapelanlage (117) und/oder eines Rückständeteichs (118) bereitgestellt ist,
**dadurch gekennzeichnet, dass**
ein Eindicker (112) zwischen dem Mischer (204) und dem Flotationskreislauf (109) bereitgestellt ist, wobei der Eindicker (112) dazu konfiguriert ist, das Material (110, 111), das den Flotationskreislauf (109) verlässt, zu entwässern und die entwässerten Rückstände (116) zu dem Mischer (204) bereitzustellen, und
wobei ein Filter (115) zwischen dem Mischer (204) und dem Eindicker (112) bereitgestellt ist, wobei der Filter (115) dazu konfiguriert ist, Material (114), das den Eindicker (112) verlässt, weiter zu entwässern.

2. Mineralaufbereitungsanlage (200, 300) nach einem der vorstehenden Ansprüche, wobei der Trockenfeingutstrom (38) eine Partikelgrößenverteilung kleiner als 20 Mikrometer aufweist.

3. Mineralaufbereitungsanlage (200, 300) Anspruch 2, wobei der Trockenfeingutstrom (38) eine Partikelgrößenverteilung kleiner als 15 Mikrometer aufweist.

4. Mineralaufbereitungsanlage (200, 300) Anspruch 3, wobei der Trockenfeingutstrom (38) eine Partikelgrößenverteilung kleiner als 10 Mikrometer aufweist.

5. Mineralaufbereitungsanlage (200, 300) nach einem der vorstehenden Ansprüche, wobei der Trockengrobgutstrom (202) eine Partikelgrößenverteilung größer als der Feingutstrom (38) aufweist.

6. Mineralaufbereitungsanlage (200, 300) nach einem der vorstehenden Ansprüche, wobei die Trockenluft-Partikelabscheidungsvorrichtungen (201, 304, 307) aus der Gruppe ausgewählt sind, die aus Folgenden besteht: einem Feststoff-Feststoff-Sichter, einem Luftabscheider, einem statischen Abscheider, einem statischen Sandabscheider, einer Dropout-Box, einem V-Abscheider, einem dynamischen Abscheider, einem Drehluft-Sichter, einem Trockenschleudersichter, einem Turboabscheider der ersten Generation, der einen oder mehrere innere Zyklone umfasst, einem Zyklonabscheider der zweiten Generation, der einen oder mehrere externe Zyklone umfasst, einem Käfigabscheider der dritten Generation, der einen Kurzschlusskäfig oder Rotorkäfig umfasst, einem dynamischen ROKSH-Abscheider, einem dynamischen O-Sepa^{®}-Abscheider, einem Gaszyklon, einem statischen Fallbettabscheider und einem Trockenzyklonabscheider.

7. Mineralaufbereitungsanlage (200, 300) nach einem der vorstehenden Ansprüche, die weiter einen Gewebefilter (34) zwischen den Trockenluft-Partikelabscheidungsvorrichtungen (304, 307) und dem Mischer (204) umfasst.

8. Mineralaufbereitungsanlage (200, 300) nach einem der vorstehenden Ansprüche, die weiter einen Magnetabscheider (310) umfasst, der dazu konfiguriert ist, eine magnetische Abscheidung an dem Trockenfeingutstrom (38) auszuführen und magnetische Partikel oder ferromagnetische Minerale (311) daraus zu gewinnen.

9. Verfahren zum Gewinnen von Metallwertstoffen aus Erz (3) unter Verwenden der Mineralaufbereitungsanlage (200, 300), die in einem der vorstehenden Ansprüche 1-8 beschrieben ist; wobei das Verfahren die folgenden Schritte umfasst:
Zerkleinern des Erzes (3), um Beschickungsmaterial (31) für den Trockenmahlkreislauf zu erzeugen;
Trockenmahlen des Beschickungsmaterials (31) in dem Trockenmahlkreislauf unter Verwenden der vertikalen Walzenmühle (32) oder Wälzmühle (302);
Senden von Produkt von der vertikalen Walzenmühle (32) oder der Wälzmühle (302) zu den Trockenluft-Partikelabscheidungsvorrichtungen (201, 304, 307);
Erzeugen des Trockenfeingutstroms (38) und des Trockengrobgutstroms (202) unter Verwenden der Trockenluft-Partikelabscheidungsvorrichtungen (201, 304, 307);
Ausführen eines Flotationsvorgangs an dem Trockengrobgutstrom (202) in dem Flotationskreislauf (109);
Entwässern des Materials (110, 111), das den Flotationskreislauf (109) verlässt, um die entwässerten Rückstände (116) zu erzeugen; und
Mischen (204) des Trockenfeingutstroms (38) mit den entwässerten Rückständen (116), **dadurch gekennzeichnet, dass** das Entwässern des Materials (110, 111), das den Flotationskreislauf (109) verlässt, um die entwässerten Rückstände (116) zu erzeugen, das Eindicken (112) des Materials (110, 111), das den Flotationskreislauf (109) verlässt, umfasst, und wobei das Entwässern des Materials (110, 111), das den Flotationskreislauf (109) verlässt, zum Erzeugen der entwässerten Rückstände (116) das Filtern (115) des Materials (110, 111), das den Flotationskreislauf (109) verlässt, umfasst.

10. Verfahren nach Anspruch 9, das weiter das Ausführen einer magnetischen Abscheidung (310) an dem Trockenfeingutstrom (38) zum Entfernen magnetischer Partikel oder ferromagnetischer Minerale (311) daraus umfasst.

## Revendications

1. Usine de traitement de minéraux (200, 300) pour récupérer des métaux précieux d'un minerai (3), l'usine de traitement de minéraux (200, 300) comprenant un circuit de flottaison (109) et un circuit de broyage à sec précédant le circuit de flottaison (109), dans laquelle
le circuit de broyage à sec comprend un laminoir à cylindre vertical (32) ou un broyeur à cylindre (302), et une pluralité de dispositifs de séparation de particules d'air sèches (201, 304, 307) entre ledit laminoir à cylindre vertical (32) ou ledit broyeur à cylindre (302) et le circuit de flottaison (109) ; les dispositifs de séparation de particules d'air sèches (201, 304, 307) étant configurés pour fournir un flux de particules fines sèches (38), et un flux de particules grossières sèches (202),
dans laquelle le flux de particules grossières (202) est fourni au circuit de flottaison (109) pour récupérer lesdits métaux précieux,
dans laquelle le flux de particules fines sèches (38) est combiné à des résidus asséchés (116) dérivés d'un matériau (110, 111) quittant ledit circuit de flottaison (109),
dans laquelle le flux de particules fines sèches (38) est combiné aux résidus asséchés (116) dans un mélangeur (204),
dans laquelle le mélangeur (204) est prévu en amont d'un équipement d'empilement (117) et/ou d'un bassin de décantation (118),
**caractérisée en ce que**
un épaississeur (112) est prévu entre le mélangeur (204) et le circuit de flottaison (109), l'épaississeur (112) étant configuré pour assécher le matériau (110, 111) quittant ledit circuit de flottaison (109) et fournir les résidus asséchés (116) au mélangeur (204), et
dans laquelle un filtre (115) est prévu entre le mélangeur (204) et l'épaississeur (112), le filtre (115) étant configuré pour assécher davantage le matériau (114) quittant ledit épaississeur (112).

2. Usine de traitement de minéraux (200, 300) selon l'une quelconque des revendications précédentes, dans laquelle ledit flux de particules fines sèches (38) présente une distribution granulométrique inférieure à 20 microns.

3. Usine de traitement de minéraux (200, 300) selon la revendication 2, dans laquelle ledit flux de particules fines sèches (38) présente une distribution granulométrique inférieure à 15 microns.

4. Usine de traitement de minéraux (200, 300) selon la revendication 3, dans laquelle ledit flux de particules fines sèches (38) présente une distribution granulométrique inférieure à 10 microns.

5. Usine de traitement de minéraux (200, 300) selon l'une quelconque des revendications précédentes, dans laquelle le flux de particules grossières sèches (202) présente une distribution granulométrique supérieure à celle du flux de particules fines sèches (38).

6. Usine de traitement de minéraux (200, 300) selon l'une quelconque des revendications précédentes, dans laquelle les dispositifs de séparation de particules d'air sèches (201, 304, 307) sont sélectionnés dans le groupe consistant en : un classificateur solide-solide, un séparateur d'air, un séparateur statique, un séparateur de sable statique, un caisson de dépôt, un séparateur en V, un séparateur dynamique, un classificateur d'air rotatif, un classificateur pneumatique centrifuge de type à tourbillon forcé, un séparateur turbo de première génération comprenant un ou plusieurs cyclones internes, un séparateur cyclonique de deuxième génération comprenant un ou plusieurs cyclones externes, un séparateur à cage de troisième génération comprenant une cage d'écureuil ou de rotor, un séparateur dynamique ROKSH, un séparateur dynamique O-Sepa^{®}, un cyclone de gaz, un séparateur à lit tombant statique et un séparateur cyclonique à sec.

7. Usine de traitement de minéraux (200, 300) selon l'une quelconque des revendications précédentes, comprenant en outre un filtre dépoussiéreur (34) entre les dispositifs de séparation de particules d'air sèches (304, 307) et le mélangeur (204).

8. Usine de traitement de minéraux (200, 300) selon l'une quelconque des revendications précédentes, comprenant en outre un séparateur magnétique (310) configuré pour réaliser une séparation magnétique sur le flux de particules fines sèches (38) et récupérer des particules magnétiques ou des minéraux ferromagnétiques (311) à partir de celui-ci.

9. Procédé de récupération de métaux précieux à partir d'un minerai (3) en utilisant l'usine de traitement de minéraux (200, 300) selon l'une quelconque des revendications 1-8 ; le procédé comprenant les étapes suivantes :
le concassage du minerai (3) pour produire une alimentation (31) du circuit de broyage à sec ;
le broyage à sec de l'alimentation (31) dans le circuit de broyage à sec en utilisant le laminoir à cylindre vertical (32) ou le broyeur à cylindre (302) ;
l'envoi du produit depuis le laminoir à cylindre vertical (32) ou le broyeur à cylindre (302) jusqu'aux dispositifs de séparation de particules d'air sèches (201, 304, 307);
la production du flux de particules fines sèches (38) et du flux de particules grossières sèches (202) en utilisant les dispositifs de séparation de particules d'air sèches (201, 304, 307) ;
la réalisation d'une opération de flottaison sur le flux de particules grossières sèches (202) dans le circuit de flottaison (109) ;
l'assèchement du matériau (110, 111) quittant ledit circuit de flottaison (109) pour produire les résidus asséchés (116) ; et
le mélange (204) du flux de particules fines sèches (38) avec les résidus asséchés (116), **caractérisé en ce que** l'assèchement du matériau (110, 111) quittant ledit circuit de flottaison (109) pour produire les résidus asséchés (116) comprend l'épaississement (112) du matériau (110, 111) quittant ledit circuit de flottaison (109) et dans lequel l'assèchement du matériau (110, 111) quittant ledit circuit de flottaison (109) pour produire les résidus asséchés (116) comprend le filtrage (115) du matériau (110, 111) quittant ledit circuit de flottaison (109).

10. Procédé selon la revendication 9, comprenant en outre la réalisation d'une séparation magnétique (310) sur le flux de particules fines sèches (38) pour retirer des particules magnétiques ou des minéraux ferromagnétiques (311) de celui-ci.
